# EUROPEAN PATENT APPLICATION

(11) **EP 4 570 471 A1**
(43) Date of publication of application: **18.06.2025**
(21) Application number: 24218620.3
(22) Date of filing: 10.12.2024
(51) Int. Cl.: B29C 48/41, B29C 48/25, B29C 48/76, B29C 48/525, B29C 48/365, B29B 7/48

(54) **CONICAL TWIN SCREW PUMP AND NEW EXTRUSION TECHNOLOGY**

(30) Priority: 13.12.2023 IT 202300026538
(71) Applicant: Lico S.r.l., 21051 Arcisate (VA) (IT)
(72) Inventor: LICO, Franco, 21050 Cuasso al Monte (VA) (IT)
(74) Representative: Botti & Ferrari S.p.A.

(57) **Abstract**

Conical twin screw pump (100) for extrusion plant, said conical twin screw pump (100) comprising a casing (8) defining at least one pumping chamber (83) extending along a longitudinal direction (x) between a gas outlet passage (32) and a die (7); a feeding hole for a material to be processed, which opens transversally to said longitudinal direction (x) in an intermediate position between the gas outlet passage (32) and the die (7); and two counter-rotating conical screws (52, 62) arranged within said pumping chamber (83), said conical screws being meshed to each other and converging toward the die (7); a rotation of said conical screws (52, 62) causing the displacement of the material to be processed from the inlet hole to the die (7) and the simultaneous gas evacuation toward the gas outlet passage (32).

## Description

### Field of application

The present invention refers to a conical twin screw pump which can be advantageously used as the end stage of an extrusion and/or mixing plant.

In particular, the pump according to the invention finds useful application in various industrial sectors in which the extrusion of viscous materials which are susceptible to alterations at high temperatures is required.

Examples of sectors affected by the present invention are: the food sector, in which it can be used for the extrusion of spaghetti or other types of long pasta; the plastic sector, in which it can process thermosetting plastic materials or rigid PVC; the detergent sector, in which it is used to obtain dust-free granulates; the chemical sector, for the production of high-viscosity polyurethanes; and others.

### Prior art

As well known, an extruder is required in the previously identified technical sectors and in others. Generally, said process comprises:
a first softening stage of the material to be extruded;
a second softening stage with possible additives, for example colorants and/or mineral fillers and/or fibers;
a third stage of ejection of the extruded mixture and possible degassing for producing spaghetti, ribbons, granules or profiles.

Normally, according to the prior art, the three stages are integrated into a single, relatively bulky extrusion apparatus.

Said apparatus can be, for example, a cylindrical twin screw extruder with co-rotating rotation of the screws. The mechanical pressure exerted by the rotation of the screw bodies allows the complete homogenization of both solid products and solid and liquid products, deforming them plastically and forming a ductile amalgam. In this case, however, high rotation speeds are necessary to ensure the complete homogenization of the product and the advancement inside a mixing chamber or barrel. This generates high product temperatures, which can be contraindicated, for example in the case of thermosetting plastics.

Furthermore, the extruders mentioned above suffer from a reflux that forces a significant axial extension of the barrel body, with a consequent increase in dimensions and costs of the machinery.

In some technological sectors, above all the production of long pasta, it is preferable to use a single-screw extruder that operates at low rotation speeds precisely to avoid overheating of the material. In this case, however, it is necessary to use an internally corrugated barrel to ensure the advancement of the material, which causes the inconvenience of a difficult cleaning of the barrel due to stagnation points.

Another drawback of the plants of the prior art is that they require, in most cases, specific degassing devices.

The technical problem solved by the present invention is therefore to provide a conical twin screw pump downstream of a mixer in order to solve the drawbacks complained in the prior art.

A purpose of the present invention is, in particular, to regulate the mixing, extrusion, degassing and end pumping phases of solid products or solid products mixed with liquids, ensuring high process flexibility and allowing the different devices to be adapted to the material which was actually treated.

Another purpose of the invention is to reduce the overall cost of these plants without penalizing their reliability.

A further purpose of the invention is to devise an extrusion device, independently from the other phases, which is capable of working at low speeds while avoiding excessive heating of the product.

Still another purpose of the invention is to provide a device with self-cleaning properties, or which in any case does not have stagnation dead points that make cleaning the inner chamber difficult.

A further purpose of the invention is to allow a high compaction of the material in the extrusion end phase, simultaneously carrying out a degassing action without the need to prepare a device designated thereto.

### Summary of the invention

The previously identified technical problem is solved by a conical twin screw pump for extrusion plant, said conical twin screw pump comprising a casing defining at least one pumping chamber extending along a longitudinal direction between a gas outlet passage and a die; a feeding hole for a material to be processed, which opens transversally to said longitudinal direction in an intermediate position between the gas outlet passage and the die; and a first and a second counter-rotating conical screws arranged within said pumping chamber, said first and second conical screws being meshed to each other and converging toward the die; a rotation of said first and second conical screws causing the displacement of the material to be processed from the inlet hole to the die and the simultaneous gas evacuation toward the gas outlet passage.

Said pump is advantageously separated from the rest of an extrusion plant, defining only the end portion of the latter, unlike the extruders of the prior art which are bulky machines and are designated for a specific type of product. The pump according to the present invention is therefore particularly flexible, being for example adapted to the extrusion of long pasta, rigid PVC, granulated detergents, high viscosity polyurethanes. The pump can also be advantageously used in material recycling, for example to obtain polymeric materials from cigarette butts.

Preferably, the conical screws have a profile thread and a constant pitch along the entire extension of the pumping chamber. In other words, the pumping chamber is entirely occupied by the threaded portion of the conical screws, the thread having no significant changes in pitch or tooth conformation, as it instead occurs in the extruder screws that must perform multiple functions and are therefore segmented into different sections with different geometry. This feature gives particular compactness to the screw.

Preferably, the extension of said threaded portion is equal to or less than 100 cm, still preferably equal to or less than 70 cm, for example equal to 50 cm. This gives particular axial compactness to the entire machine, which can have small dimensions, for example less than 1.5 m or even less than 1 m.

Preferably, the pumping chamber has an inner wall, facing toward the conical screws, which is smooth and free of undercuts. This aspect, combined with the use of fully meshed screws, allows the pumping chamber to be kept clean, since there are no points of stagnation of the material and the meshing constantly cleans the valley of the opposite profiles.

In light of the previously discussed limited dimensions, the conical twin screw pump according to the invention can be considered to be structurally independent and individually manipulable, as well as orientable according to the process needs. In view of this, the pump can be fed laterally or from above depending on the specific conformation of the rest of the plant.

Preferably, the casing defines a degassing chamber arranged upstream of the gas outlet passage along the longitudinal direction. Said degassing chamber is open towards the outside, for example through lateral recesses which are protected by nets. Preferably, the gas outlet passage is constituted by the non-sealed hole which is crossed by the first and second conical screws in their development between the pumping chamber and the degassing chamber.

Preferably, the conical twin screw pump comprises a gearmotor coupled to the first conical screw, the second conical screw being coupled in turn to the first conical screw via a splitter comprising a bevel gear for torque transmission. The splitter transmits torque from the driving screw to the driven screw, thus ensuring the synchronous counter-rotating motion of the two components, further aided by the meshing of the threaded portions.

Preferably, the degassing chamber is interposed between the splitter and the pumping chamber, so as to create an assembly that is compact and can be easily manipulated.

Still preferably, the splitter acts on supporting half-shafts that are coaxially connected to the conical screws via a transmission joint, for example a sleeve joint. Particularly effectively, said transmission joint is contained into the degassing chamber, so that the actual conical screws extend from said degassing chamber into the pumping chamber up to the die.

The technical problem according to the present invention is also solved by an extrusion plant comprising at least one first softening stage of a material to be extruded and an extrusion end stage, said extrusion and degassing end stage resulting in a conical twin screw pump of the type described above, said conical twin screw pump being a machine separated from the other machines which constitute the extrusion plant.

The plant can also comprise a second softening stage interposed between the first softening stage and the extrusion end stage, wherein the process provides the addition of additives, for example liquid additives, to the material to be extruded.

The technical problem according to the present invention is also solved by an extrusion method made by means of an extrusion plant of the type described above, comprising a phase of softening a material to be extruded in said first softening stage and a phase of extruding the softened material through the conical twin screw pump, wherein, in the phase of extruding the softened material, the first and second twin screws are brought into counter-rotation at a speed equal to or less than 150 revolutions per minute, preferably between 10 and 80 revolutions per minute. The low rotation speed prevents the reaching of high temperatures that could degrade or harden certain heat-sensitive products, such as pasta or thermosetting polymers.

Further features and advantages of the present invention will be apparent from the description, given herein below, of preferred embodiments given by way of illustrative and non-limiting example with reference to the attached drawings.

### Brief description of the drawings

- Figure 1 shows a perspective view of a conical twin screw pump according to the present invention;
- Figure 2 shows a perspective view of the conical twin screw pump shown in Figure 1 but observed from an opposite observation point;
- Figure 3 shows a top view of the conical twin screw pump in Figure 1;
- Figure 4 shows a longitudinal sectional view of the conical twin screw pump of Figure 4, taken along the section plane C-C;
- Figure 5 shows a further perspective view of a variant of the conical twin screw pump according to the present invention;
- Figure 6 schematically shows an extrusion plant comprising a conical twin screw pump according to the present invention.

### Detailed description

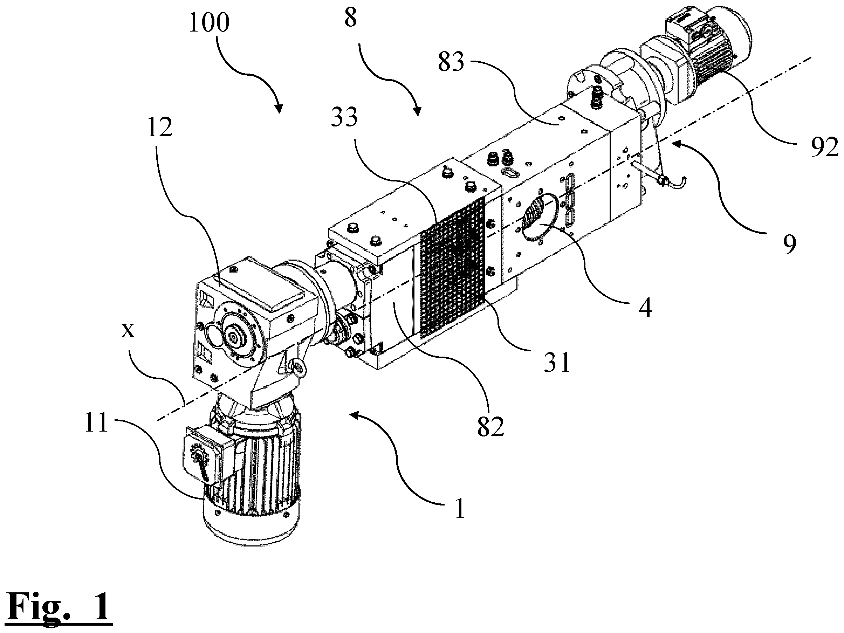

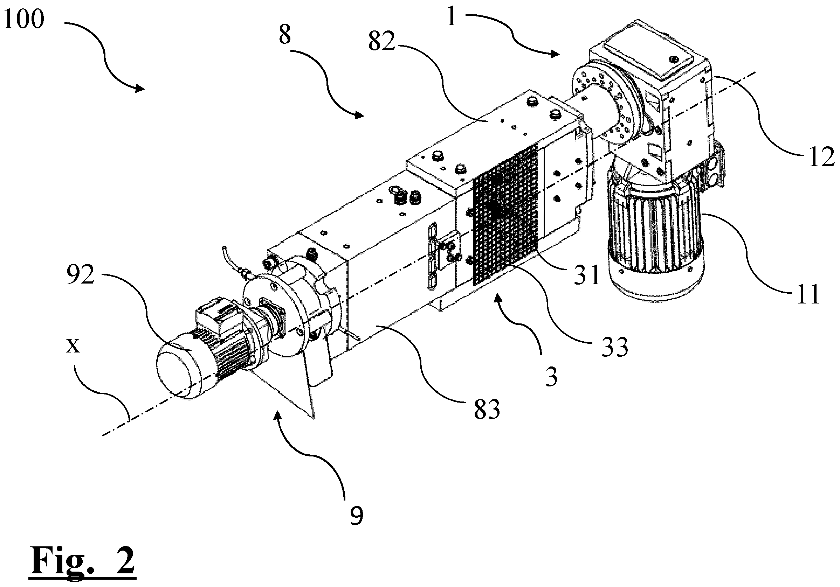

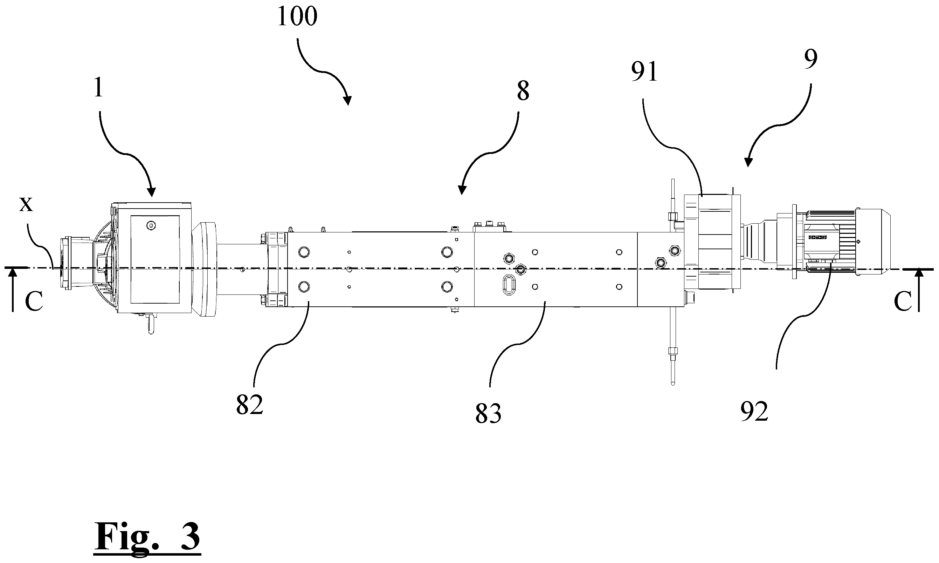

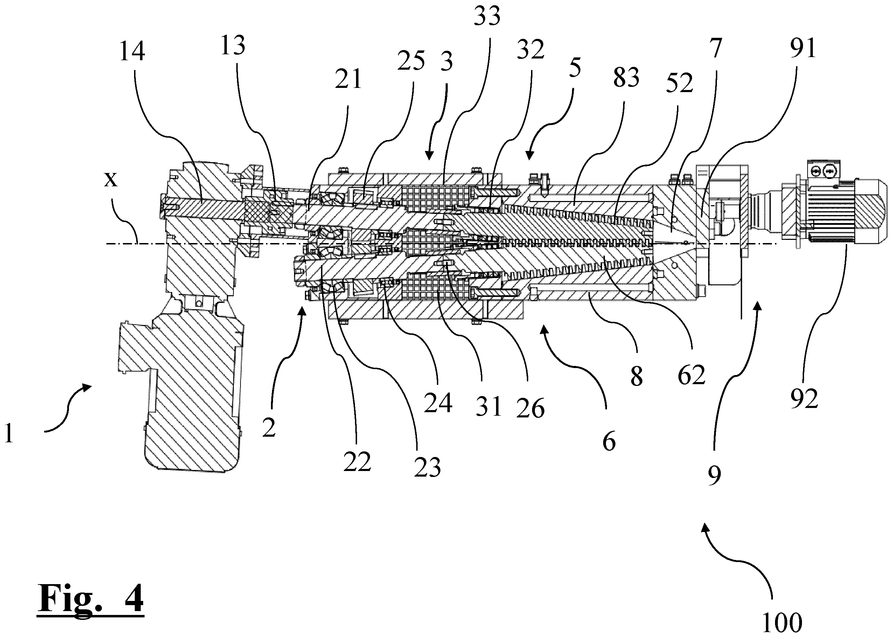

In the attached figures 1-4, a conical twin screw pump according to the present invention is identified with 100, whose function in the context of a process plant will be better specified in the following.

The abovementioned pump 100 comprises a casing 8 of elongated shape, which is parallelepiped in the example shown in the figures. Said casing 8 develops between a first end and a second end near which a die 7 is arranged for the exit of the extruded product. The casing 8 furthermore has a feeding hole 4 in an intermediate position between the first and second ends.

This casing 8 defines a longitudinal inner chamber within which two rotors are rotatably mounted, respectively a drive rotor 5 and a driven rotor 6, converging towards the second end of the casing. In other words, the two rotors have respective convergent longitudinal axes.

The rotors are both made up of a supporting half-shaft on the first end followed by a conical screw on the second end. The supporting half-shafts are rotatably mounted on first rolling bearings 23 arranged at the first end, they then extend within a portion of the splitter 2 of the inner chamber and again within a degassing chamber 82, in which they couple to the conical screws 52 and 62 via transmission joints 26.

In the splitter portion or chamber 82, a splitter 2 is formed, which consists of a bevel gear 25 which couples together the two aforementioned half-shafts 21 and 22. Beyond said gear, the half-shafts pass through a separation septum from the degassing chamber 3, and are supported herein by second rolling bearings 24.

The degassing chamber 3, in which the half-shafts and the conical screws couple together, has vent openings 31 towards the outside of the casing 8, said openings being covered in the embodiment described herein by degassing nets 33.

The two conical screws 52 and 62 have helical threads meshed with each other and perfectly fit into a pumping portion 83 of the inner chamber, said pumping portion 83 being tapered in order to follow the conformation of the converging screws. The aforementioned feeding hole 4 opens laterally onto said pumping chamber 83.

An unthreaded end of the conical screws passes through a separation septum between the pumping chamber 83 and the degassing chamber 3, inserting itself into a non-sealed hole that allows the gas to escape from the pumping chamber towards the degassing chamber and from there to the outside of the casing. Said hole is therefore a gas outlet passage 32 that allows the gases to be evacuated.

The opposite end of the conical screws is hinged at the second end of the casing 8, wherein the pumping chamber 83 closes with the aforementioned die 7, which in this case results in a conical die.

In the embodiment described herein, the casing 8 is made up of two separate bodies, which are joined together by connecting screws: the first body defines therein the splitter chamber 82 and the degassing chamber 3; the second body defines therein the pumping chamber 83.

A per se known gearmotor 1 is coupled to the first end, the gearmotor comprising in turn a first electric motor 11 and a speed reducer 12. The speed reducer 12 comprises an output shaft 14 rotatably connected to a free end of the aforementioned motor rotor 5 via a transmission joint of the gearmotor 13.

In the specific illustrated embodiment, the conical twin screw pump 100 comprises a cutting unit 9. Said cutting unit in turn comprises a cutter 91 and a second electric motor 92. The cutter 91 is arranged close to the end downstream of the conical die 7 and is controlled by the second electric motor 92 which allows it to be operated. Once the material has been cut by the action of the cutter 91, it exits the device through an outlet of the extruder.

It can be noted that, in the embodiment illustrated in Figures 1-4, the feeding hole 4 opens laterally with respect to a vertical wall of the casing 8, so that the device is arranged to be fed laterally.

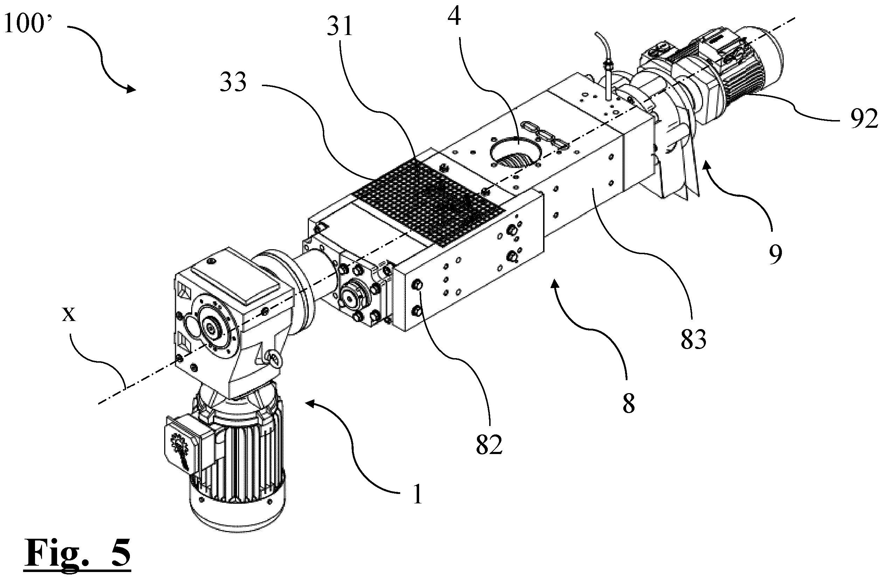

In a variant of the conical twin screw pump 100', illustrated in figure 5, the casing 8 is oriented in a different manner so that the feeding hole 4 opens onto an upper horizontal wall, in order to allow a feeding from above.

The operation of the conical twin screw pump 100, 100' according to the present invention will now be briefly described.

In use, the gearmotor 1 brings into rotation the drive rotor 5, which brings the driven rotor 6 into counter-rotation via the bevel gear 25. A material to be processed, which is preferably already softened and mixed with possible additives, is then introduced into the feeding hole 4. The feeding hole 4 brings the material directly into the pumping chamber 83, wherein the conical screws 52 and 62 drive it towards the die 7. While being driven along the conical screws, the softened material is compacted and degassed, the gases being expelled in the direction opposite to that of the material's advancement towards the degassing chamber 3, which they reach via the gas outlet passage 32.

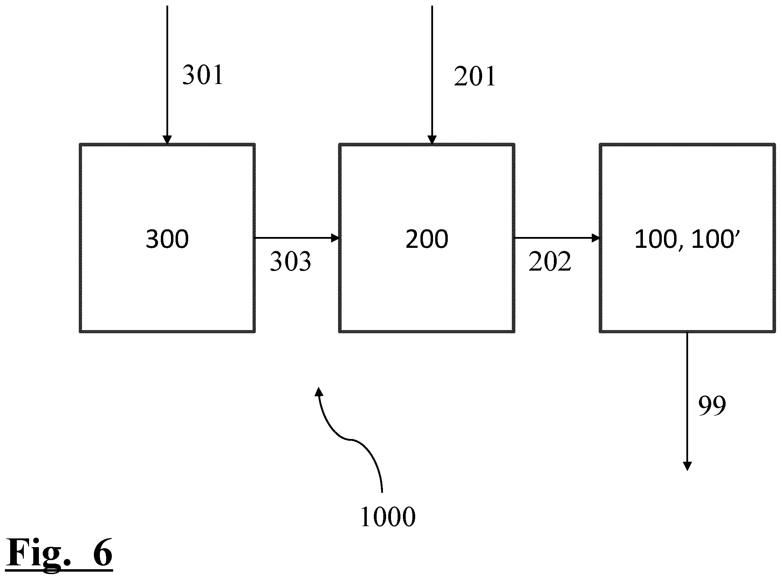

Figure 6 schematically shows an extrusion plant 1000 comprising the previously described conical twin screw pump 100, 100'. The extrusion plant comprises a first softening stage 300, a second softening stage 200 and finally an extrusion and degassing end stage carried out by the previously described conical twin screw pump 100,100'.

The products to be treated 301, for example plastic products or products for food use, enter the aforementioned softening stage 300 and are softened, allowing the exit of a softened and non-homogeneous material. The exiting material 303 from the softening stage 300 enters the softening stage 200. In said softening stage 200, chemical products 201 are added, for example solvents or colorants, so as to obtain the desired mixing of the material. The exiting material 202 from the softening stage 200 enters the conical twin screw pump 100,100' through the feeding hole 4, is extruded and degassed, allowing the formation of the end product 99.

The softening 300, mixing 200 and extrusion and degassing stages carried out by the conical twin screw pump 100,100' can be performed independently of each other, having the input products available for each stage. In particular, the stage carried out by the conical twin screw pump 100, 100' can be movable; therefore, positioning at the end of the previous stage, favoring greater logistical flexibility of the processes that it involves. The possibility of mobility of the extrusion and degassing stage is given by the small and compact dimensions of the conical twin screw pump 100,100'.

An advantage of the pump according to the present invention is that it can be introduced downstream of a mixer or a softener and/or at the outlet of a twin screw extrusion in order to generate pressure, thus eliminating the reflux on the two screws rotating in concurrent directions in the twin screw extrusion. In this way, it is possible to avoid lengthening the body of the extruder with considerable economic savings.

Another advantage of the pump according to the invention is that it can replace and substitute the single screw extruder, colloquially called press, which is currently used in the production of spaghetti or other long pasta. Compared to the traditional press, the pump according to the present invention allows the degassing as well as an easier cleaning due to the smooth inner surface.

Still another advantage of the pump according to the present invention is that it can be installed in different configurations, for example horizontal, vertical or sloped, thus adapting to the process.

Still a further advantage of the pump is that it allows developing relatively high pressures even at low revolutions, for example between 10 and 80 revolutions per minute, thus avoiding the overheating of pasty products.

Obviously, a skilled person may make numerous modifications and variations to the pump described above, in order to satisfy contingent and specific needs, all of which are however included within the scope of protection of the invention as defined by the following claims.

## Claims

1. Conical twin screw pump (100, 100') for extrusion plant (1000) comprising:
- a casing (8) defining at least one pumping chamber (83) extending along a longitudinal direction (x) between a gas outlet passage (32) and a die (7);
- a feeding hole (4) for a material to be processed, which opens transversally to said longitudinal direction (x) in an intermediate position between the gas outlet passage (32) and the die (7); and
- a first and a second counter-rotating conical screws (52, 62) arranged within said pumping chamber (83), said first and second conical screws (52, 62) being meshed to each other and converging toward the die (7); a rotation of said first and second conical screws (52, 62) causing the displacement of the material to be processed from the inlet hole (4) to the die (7) and the simultaneous gas evacuation toward the gas outlet passage (32).

2. Conical twin screw pump (100, 100') according to claim 1, wherein the conical screws (52,62) have a profile thread and a constant pitch along the entire extension of the pumping chamber (83).

3. Conical twin screw pump (100, 100') according to any one of the preceding claims, wherein the extension of said threaded portion is equal to or less than 100 cm, preferably equal to or less than 70 cm.

4. Conical twin screw pump (100, 100') according to any one of the preceding claims, wherein said pumping chamber (83) has an inner wall, facing toward the conical screws (52, 62), which is smooth and free of undercuts.

5. Conical twin screw pump (100, 100') according to one of the preceding claims, wherein said pump can be individually manipulated and oriented according to the process needs.

6. Conical twin screw pump (100, 100') according to one of the dependent claims, wherein said casing (8) defines a degassing chamber (3) arranged upstream of the gas outlet passage (32) along the longitudinal direction (x).

7. Conical twin screw pump (100, 100') according to one of the preceding claims, further comprising a gearmotor (1) coupled to the first conical screw (52), the second conical screw (62) being coupled in turn to the first conical screw (52) via a splitter (2) comprising a bevel gear (25) for torque transmission.

8. Conical twin screw pump (100, 100') according to claims 6 and 7, wherein the degassing chamber (3) is interposed between the splitter (2) and the pumping chamber (83).

9. Extrusion plant (1000) comprising at least one first softening stage (300) of a material to be extruded and an extrusion end stage, said extrusion and degassing end stage resulting in a conical twin screw pump (100, 100') according to one of the preceding claims, said conical twin screw pump (100, 100') being a machine separated from the other machines which constitute the extrusion plant (1000).

10. Extrusion plant (1000) according to claim 9, further comprising a second mixing stage (200) interposed between the first softening stage (300) and the extrusion end stage.

11. Extrusion method made by means of an extrusion plant according to one of claims 9 or 10, comprising a phase of softening a material to be extruded in said first softening stage (300) and a phase of extruding the softened material through the conical twin screw pump (100, 100') wherein in the phase of extruding the softened material the first and second twin screws (52, 62) are brought into counter-rotation at a speed equal to or less than 150 revolutions per minute, preferably between 10 and 80 revolutions per minute.
